Europäisches Patentamt

European Patent Office

Office européen des brevets

(19)

(11) **EP 0 885 420 B1**

(12) **EUROPÄISCHE PATENTSCHRIFT**

(45) Veröffentlichungstag und Bekanntmachung des Hinweises auf die Patenterteilung:
**30.01.2002 Patentblatt 2002/05**

(21) Anmeldenummer: 97915305.3

(22) Anmeldetag: **26.02.1997**

(51) Int Cl.[7]: **G06F 15/80**

(86) Internationale Anmeldenummer:
**PCT/DE97/00340**

(87) Internationale Veröffentlichungsnummer:
**WO 97/33235 (12.09.1997 Gazette 1997/39)**

(54) **VERFAHREN ZUM TRAINIEREN EINES NEURONALEN NETZES**

METHOD OF TRAINING A NEURAL NETWORK

PROCEDE D'APPRENTISSAGE POUR UN RESEAU NEURONAL

(84) Benannte Vertragsstaaten:
**AT DE FR GB**

(30) Priorität: **06.03.1996 DE 19608736**

(43) Veröffentlichungstag der Anmeldung:
**23.12.1998 Patentblatt 1998/52**

(73) Patentinhaber: **SIEMENS AKTIENGESELLSCHAFT
80333 München (DE)**

(72) Erfinder:
- **TRESP, Volker
  D-80539 München (DE)**
- **NEUNEIER, Ralph
  D-80469 München (DE)**

(56) Entgegenhaltungen:
- **PROCEEDINGS OF 1995 CONFERENCE ON ADVANCES IN NEURAL INFORMATION PROCESSING SYSTEMS 8 (ISBN 0 262 20107 0), DENVER, CO, USA, 27-30 NOV. 1995, ISBN 0-262-20107-0, 1996, CAMBRIDGE, MA, USA, MIT PRESS, USA, Seiten 952-958, XP000675769 NEUNEIER R: "Optimal asset allocation using adaptive dynamic programming"**
- **ICANN '94, PROCEEDINGS OF INTERNATIONAL CONFERENCE ON ARTIFICIAL NEURAL NETWORKS, SORRENTO, ITALY, 26-29 MAY 1994, ISBN 3-540-19887-3, 1994, BERLIN, GERMANY, SPRINGER-VERLAG, GERMANY, Seiten 689-692 vol.1, XP000675756 NEUNEIER R ET AL: "Estimation of conditional densities: a comparison of neural network approaches"**
- **PROCEEDINGS OF THE THIRD INTERNATIONAL CONFERENCE ON NEURAL NETWORKS IN THE CAPITAL MARKETS, PROCEEDINGS OF THE 3RD INTERNATIONAL CONFERENCE ON NEURAL NETWORKS IN FINANCIAL ENGINEERING, LONDON, UK, 11-13 OCT. 1995, ISBN 981-02-2480-X, 1996, SINGAPORE, WORLD SCIENTIFIC, SINGAPORE, Seiten 578-587, XP000675784 ORMONEIT D ET AL: "Reliable neural network predictions in the presence of outliers and non-constant variances"**
- **PROCEEDINGS OF THE INTERNATIONAL CONFERENCE ON NEURAL NETWORKS, PARIS, JULY 9 - 13, 1990, Bd. 2, 9.Juli 1990, INSTITUTE OF ELECTRICAL AND ELECTRONICS ENGINEERS, Seiten 860-863, XP000145423 MYERS C: "REINFORCEMENT LEARNING WHEN RESULTS ARE DELAYED AND INTERLEAVED IN TIME"**
- **PROCEEDINGS OF THE CONFERENCE ON DECISION AND CONTROL, TUCSON, DEC. 16 - 18, 1992, Bd. 1 OF 4, 16.Dezember 1992, INSTITUTE OF ELECTRICAL AND ELECTRONICS ENGINEERS, Seiten 870-877, XP000370157 FRANKLIN J A: "QUALITATIVE REINFORCEMENT LEARNING CONTROL"**

EP 0 885 420 B1

## Beschreibung

Die Erfindung betrifft ein Verfahren zum Trainieren eines Neuronalen Netzes mit Trainingsdaten, die einen Finanzmarkt charakterisieren. Es wird immer wieder versucht, Änderungen eines Finanzmarktes vorherzusagen, um somit eine optimale Asset Allokation, die auch als Portfolio-Management bezeichnet wird, zu erreichen. Unter einer Asset-Allokation versteht man die Investition liquiden Kapitals in unterschiedliche Handelsoptionen wie beispielsweise Aktien, Futures, Rentenpapiere oder auch Devisen, also in alle Möglichkeiten, die ein Finanzmarkt in seiner Gesamtheit bietet. Ein Portfolio wird gebildet mit dem Ziel, eine maximale Rendite für ein vorgebbares Risiko, das der Investor eingehen möchte, innerhalb eines vorgebbaren Zeitintervalls, zu erreichen.

Aus dem Dokument [1] sind Grundlagen über Asset Allokation und Investmentanalyse bekannt. Aus dem Dokument [1] ist ebenso ein Modell, das sog. Zweipunkt-Modell zur Beschreibung einer erreichbaren Rendite abhängig von einem Risiko, das der Investor bei der Anlagemöglichkeit eingeht, bekannt. Der Versuch, anhand dieses Modells Vorhersagen über Änderungen des Finanzmarktes zu treffen, sind jedoch sehr ungenau, da weder der zeitliche Aspekt der Änderungen des Finanzmarktes noch Transaktionskosten, die bei Handlungen auf dem Finanzmarkt entstehen, berücksichtigt werden.

Ein weiterer Nachteil, der in dem in dem Dokument [1] beschriebenen Modell zu sehen ist liegt darin, daß tatsächliche Daten über Änderungen des Finanzmarktes in keinster Weise berücksichtigt werden können. Dies führt zu einer unflexiblen, ungenauen Aussage über Änderungen des Finanzmarktes, ausgehend von dem Modell.

Weiterhin ist eine sogenannte Verstärkungs-Lern-Methode (Reinforcement Learning) beispielsweise aus dem Dokument [2] bekannt.

Der Erfindung liegt das Problem zugrunde, ein Neuronales Netz zu trainieren unter Berücksichtigung von Parametern, die den Finanzmarkt charakterisieren.

Das Problem wird durch das Verfahren gemäß Patentanspruch 1 gelöst.

Bei dem erfindungsgemäßen Verfahren wird die Asset Allokation als ein Markov Entscheidungsproblem modelliert. Jeder Zustand des Markov Entscheidungsproblems wird durch einen Zustandsvektor beschrieben der Elemente aufweist, die den Finanzmarkt charakterisieren. Da bei einer Vielzahl von Einflußgrößen das Markov Entscheidungsproblem sehr hochdimensional ist, wird zum Trainieren des neuronalen Netzes die Verstärkungs-Lern-Methode (Reinforcement Learning) verwendet. Bei Verwendung dieses Verfahrens wird sowohl der Zustandsvektor eines ersten Zeitschrittes als auch der Zustandsvektor eines folgenden Zeitschrittes berücksichtigt.

Diese Vorgehensweise zum Trainieren eines Neuronalen Netzes birgt einige Vorteile in sich, insbesondere hinsichtlich einer weiteren Verwendung des auf diese Weise trainierten Neuronalen Netzes zum Treffen von Aussagen über die Änderungen des Finanzmarktes.

Ein erheblicher Vorteil des erfindungsgemäßen Verfahrens ist darin zu sehen, daß zeitliche Änderungen des Finanzmarktes in dem Modell berücksichtigt werden.

Weiterhin werden tatsächlich entstandene Daten aus der Vergangenheit bei dem Training berücksichtigt. Die Trainingsdaten, die zum Trainieren des Neuronalen Netzes verwendet werden, also der jeweilige Zustandsvektor, kann für das Training eingesetzt werden, ohne daß der Investor tatsächlich schon Kapital für Handlungen auf dem Finanzmarkt aufwenden muß. Durch die Verwendung vieler Daten des Finanzmarktes aus der Vergangenheit wird das anhand der Daten adaptierte Modell sehr flexibel bezüglich Änderungen des Finanzmarktes.

Ein weiterer Vorteil des erfindungsgemäßen Verfahrens ist darin zu sehen, daß die Bewertungsgrößen, die zur Bewertung der Zustandsvektoren herangezogen werden, sehr flexibel sind und somit leicht austauschbar bzw. erweiterbar sind, abhängig von dem jeweiligen speziellen Anwendungsaspekt. Beispielsweise können hier die klassischen Bewertungsgrößen der Rendite und des Risikos oder auch weitere Bewertungsgrößen wie eine Inflationsrate oder beispielsweise auch Depotgebühren berücksichtigt werden.

Weiterbildungen der Erfindung ergeben sich aus den abhängigen Ansprüchen.

Durch die Weiterbildung des Verfahrens gemäß Patentanspruch 5 ist es möglich, Transaktionskosten, die durch Handlungen an dem Finanzmarkt entstehen, zu berücksichtigen.

Durch die Weiterbildung des Verfahrens gemäß Patentanspruch 6 werden eine Vielzahl unterschiedlicher Zustandsvektoren einer folgenden Iteration, also einem folgenden Zeitschritt, ermittelt wodurch es möglich ist, anhand mehrerer unterschiedlicher Folgezustände das Neuronale Netz zu trainieren.

Durch die Weiterbildung des Verfahrens gemäß Patentanspruch 7 wird ein Aspekt berücksichtigt, durch den mit steigender Anzahl erfolgter Iterationsschritte Bewertungsergebnisse, beispielsweise die Rendite für "weit in der Zukunft" liegende Renditen geringer bewertet werden als "in naher Zukunft" zu erzielende Renditen.

Durch die Verfahren gemäß Patentanspruch 8 und Patentanspruch 9 werden unter Verwendung des auf die im vorigen beschriebene Weise tranierten Neuronalen Netzes Anlageentscheidungen getroffen und diese Anlageentscheidungen werden bewertet. Somit ist ein Maß bestimmt zur Abschätzung der Qualität einer Anlageentscheidung in einem Finanzmarkt. Dies kann dem Investor eine entscheidende Unterstützung bei Entscheidungen bezüglich der Investitionen auf dem Finanzmarkt, also bei der Zusammenstellung seiner spezifischen Asset Allokation sein.

Durch das Verfahren gemäß Patentanspruch 10 ist es möglich, eine optimale Anlegestrategie für die Asset Allokation zu ermitteln. Dies kann erfolgen unter vorgebbaren Einschränkungen, beispielsweise einem maximalen Risiko, das der Investor bei seinem Portfolio eingehen möchte.

Ein Ausführungsbeispiel ist in den Figuren dargestellt und wird im weiteren näher erläutert.

Es zeigen

Fig. 1 ein Ablaufdiagramm, das einzelne Verfahrensschritte des Verfahrens gemäß Patentanspruch 1 beschreibt;

Fig. 2 ein Ablaufdiagramm mit Verfahrensschritten des Verfahrens gemäß Patentanspruch 8;

Fig. 3 eine Skizze einer Rechneranordnung, mit der das Verfahren notwendigerweise durchgeführt wird, mit einem Bildschirm sowie einem Drukker zur Darstellung der Verfahrensergebnisse.

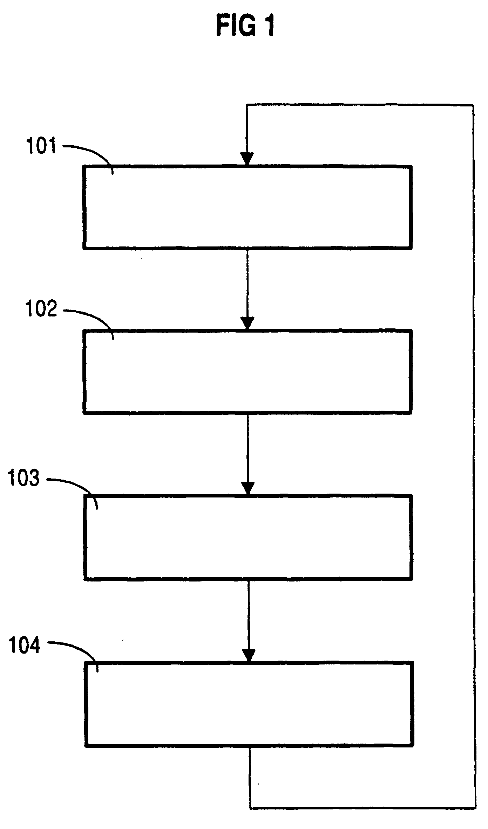

In Fig. 1 sind die einzelnen Verfahrenschritte des erfindungsgemäßen Verfahrens dargestellt. In einem ersten Schritt 101 wird ein Zustandsvektor $SV_t$ bestimmt, der Elemente aufweist, die einen Finanzmarkt charakterisieren.

Der Zustandsvektor $SV_t$ kann beispielsweise folgende Informationen aufweisen:

- Einen ersten Kurswert, beispielsweise den Schlußkurs des Deutschen Aktienindex (DAX),
- einen zweiten Kurswert, beispielsweise den Schlußkurs des CDAX,
- einen Kurswert des sogenannten Morgan Stanley Index Deutschland,
- einen 3-Monats-Zins-Kurs für den deutschen oder europäischen Finanzmarkt,
- eine nationale Umlaufrendite,
- einen dritten Kurswert, beispielsweise den Schlußkurs eines Börsentages des sogenannten Dow Jones Industrial Index USA,
- einen vierten Kurswert, beispielsweise den Kurswert des sogenannten Nikkei Index (Japan),
- den sogenannten Morgan Stanley Index Europa,
- mindestens einen Wechselkurs von einer ersten Währung, z. B. einer nationalen Währung, beispielsweise in die Währung US-Dollar,
- einen Kurswert der USA Treasury Bonds mit verschiedenen Laufzeiten,
- den Kurswert des Goldes,
- Größen, die ein Kurs-/Gewinn-Verhältnis mindestens eines Unternehmens beschreiben.

Weitere Elemente, die einen Finanzmarkt charakterisieren, können je nach Anwendungsfall ohne weiteres in dem erfindungsgemäßen Verfahren berücksichtigt werden. Die oben beispielhaft dargestellte Auswahl ist keineswegs abschließend zu verstehen.

Weiterhin kann es in einer Ausgestaltung des Verfahrens vorgesehen sein, daß der Zustandsvektor $SV_t$ den jeweils aktuellen Kapitalstand eines Anlegers (Investors) angibt.

Für den Zustandsvektor $SV_t$ wird anhand vorgegebener Bewertungsgrößen eine Bewertung $V_t$ ermittelt 102.

Als Bewertungsgrößen können beispielsweise vorgesehen werden:

- Für jede mögliche Anlageform (Aktie, Future, Rentenpapier, usw.) eine zu erwartende Rendite r sowie ein zu erwartendes Risiko, das man bei Wahl der Anlageform jeweils eingeht,
- die Inflationsrate,
- Depotgebühren, oder
- Transaktionskosten, die anfallen bei jeder Handlung, die von dem Anleger auf dem Finanzmarkt getätigt wird.

Auch diese Aufzählung ist in keinster Weise abschließend zu verstehen.

Grundlagen über zu ermittelnde Renditen r und Risiken verschiedener Anlageformen sind in dem Dokument [1] beschrieben.

Ferner wird ein zeitlich folgender Zustandsvektor $SV_{t+1}$ ermittelt 103. Der zeitlich folgende Zustandsvektor $SV_{t+1}$ hängt selbstverständlich jeweils von der getroffenen Anlageentscheidung ab, ausgehend von dem Zustandsvektor $SV_t$. Hierbei bezeichnet ein Zeitindex t jeweils einen Iterationsschritt. Der Zeitindex t ist eine beliebige natürliche Zahl. Auch für den zeitlich folgenden Zustandsvektor $SV_{t+1}$ wird eine Bewertung $V_{t+1}$ ermittelt auf dieselbe Weise, wie diese für den Zustandsvektor $SV_t$ bestimmt wurde. Das Verfahren wird also iterativ für alle Zeitschritte t durchgeführt, für die Trainingsdaten vorhanden sind und berücksichtigt werden.

Anhand der Bewertung $V_t$ des Zustandsvektors $SV_t$ und der Bewertung $V_{t+1}$ des folgenden Zustandsvektors $SV_{t+1}$ werden mit Hilfe einer Verstärkungs-Lern-Methode (Reinforcement Learning) Gewichte $w_i$ eines zu trainierenden Neuronalen Netzes NN adaptiert. Die Verstärkungs-Lern-Methode ist aus dem Dokument [2] bekannt.

Die im vorigen beschriebenen Verfahrensschritte werden bei dem erfindungsgemäßen Verfahren iterativ für jeden bekannten Trainingsdatensatz durchlaufen. Ein Trainingsdatensatz ist jeweils ein aus bekannten, vergangenen Kursverläufen bekannter Wert des jeweiligen Zustandsvektors $SV_t$ für jeweils den Iterationsschritt t und möglicherweise ein virtuelles Portfolio.

Durch das erfindungsgemäße Verfahren wird es ermöglicht, das Neuronale Netz NN mit einem stochastischen Verhalten des Finanzmarktes zu trainieren, ohne direkt Kapital in den Finanzmarkt investieren zu müssen. Ein weiterer erheblicher Vorteil des erfindungsgemäßen Verfahrens und seinen Weiterbildungen ist in der Flexibilität berücksichtigter Paramter sowie in der Berücksichtigung der Transaktionskosten für eine Handlung auf dem Finanzmarkt zu sehen.

In einer Ausgestaltung des erfindungsgemäßen Verfahrens ist es vorgesehen, daß mit wachsender Anzahl von Iterationsschritten der jeweilige folgende Zustandsvektor $SV_{t+1}$ mit seiner Bewertung $V_{t+1}$ mit vorangehenden Iterationsschritten in immer geringerem Maße in die Adaption der Gewichte einfließt. Hierzu ist ein Reduzierungsfaktor $\lambda$ vorgesehen. Der Reduzierungsfaktor $\lambda$ kann beispielsweise gebildet werden durch eine Zahl, deren Wert kleiner als 1 ist, dem Wert 1 jedoch nahe kommt, beispielsweise 0,99. Der Reduzierungsfaktor $\lambda$ wird potenziert mit dem Iterationsschritt t. Es ergibt sich dann also z. B. $0{,}99^t$. Die Bewertung $V_t$ kann sich für ein sehr einfaches Beispiel lediglich unter Berücksichtigung der Rendite r sowie der Bewertung $V_{t+1}$ des folgenden Zustandsvektors $SV_{t+1}$ und des Reduzierungsfaktors $\lambda$ ergeben zu:

$$V_t = r + \lambda \cdot V_{t+1} \qquad (1).$$

Da aus den bekannten Kursverläufen der Trainingsdaten die jeweilige Rendite r und die jeweilige Bewertung des folgenden Zustandsvektors $SV_{t+1}$ ermitteln läßt, ist die Bewertung $V_{t+1}$ für den folgenden Zustandsvektor $SV_{t+1}$ ohne weiteres möglich. Bei einer Vielzahl von Entscheidungsmöglichkeiten für die Anlageentscheidung, beispielsweise bei einem einfachsten Fall, ob eine bestimmte Anlageform gewählt wird und somit Anteile dieser Anlageform gekauft werden oder nicht, werden jeweils mindestens zwei der verschiedenen Anlageentscheidungen durchgeführt und jeweils für die getroffene Anlageentscheidung die Bewertung $V_t$ des Zustandsvektors $SV_t$ anhand der aus der jeweiligen Anlageentscheidung resultierenden Bewertung $V_{t+1}$ des folgenden Zustandsvektors $SV_{t+1}$ ermittelt.

Die Adaption $\Delta w_i$ der Gewichte $w_i$ des zu trainierenden Neuronalen Netzes NN geschieht durch die sogenannte Verstärkungs-Lern-Methode (Reinforcement Learning), beispielsweise nach folgender Vorschrift:

$$\Delta w_i = (V_t - (r + \lambda \cdot V_{t+1})) \cdot \frac{\partial NN}{\partial w_i} \qquad (2),$$

wobei

- mit einem Index i jedes Gewicht $w_i$ des zu trainierenden Neuronalen Netzes NN bezeichnet wird, und

- mit $\frac{\partial NN}{\partial w_i}$ jeweils eine partielle Ableitung der Ausgabefunktion des Neuronalen Netzes NN nach dem jeweiligen zu adaptierenden Gewicht $w_i$ des Neuronalen Netzes NN bezeichnet wird.

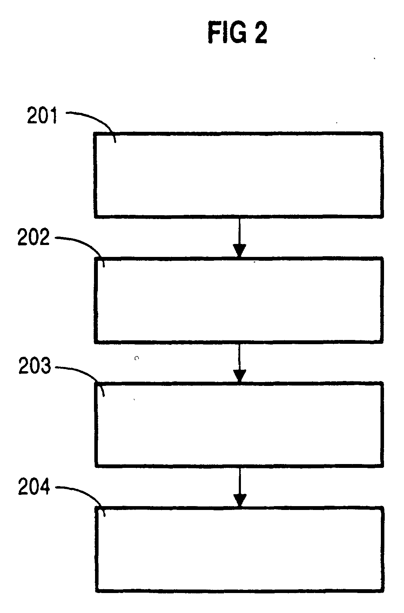

Das auf die im vorigen beschriebene Weise trainierte Neuronale Netz NN kann nun in einer Weiterbildung des Verfahrens zur Ermittlung einer Anlageentscheidung verwendet werden (vgl. Figur 2). Dies erfolgt beispielsweise bei einer Vielzahl möglicher Anlageentscheidungen dadurch, daß für jede Anlageentscheidung, die in einem ersten Schritt 201 bestimmt werden, die Bewertung $V_t$ des Zustandsvektors $SV_t$ abhängig von der jeweiligen Anlageentscheidung ermittelt wird 203. Bei der Ermittlung der Bewertung $V_t$ wird wiederum der folgende Zustandsvektor $SV_{t+1}$ für die jeweilige getroffene Anlageentscheidung bestimmt 202.

Aus den Bewertungen $V_t$, deren Anzahl der Anzahl der Anlageentscheidungen entspricht, wird die Anlageentscheidung ausgewählt, die zu der jeweiligen Bewertung $V_t$ geführt hat, die zu einem vorgebbaren Investitionsziel den optimalsten Wert ergeben hat 204. Die ermittelte Anlageentscheidung kann entweder einem Benutzer empfohlen werden, beispielsweise indem das Ergebnis auf einem Bildschirm BS oder einem Drucker DR dargestellt wird, oder die Anlageentscheidung kann auch direkt getroffen werden, unabhängig von dem Benutzer, beispielsweise dem Investor.

Das trainierte Neuronale Netz NN kann jedoch auch zur Ermittlung einer gesamten Anlagestrategie verwendet werden. Hierzu wird eine ganze Folge von Zustandsvektoren $SV_t$ mit unterschiedlichen Werten der Bewertungsgrößen, und somit der Investitionsziele und der Anlagestrategie bestimmt. Hierbei sind beispielsweise Variationen in dem Risiko, das der Investor bei den Zusammenstellungen des Portfolios bereit ist einzugehen, oder auch die Höhe der Rendite r, die erzielt werden soll zu berücksichtigen.

Für die unterschiedlichen Folgen von Anlageentscheidungen wird jeweils der zeitlich letzte Wert der Bewertung $V_t$ des zeitlich letzten Zustandsvektors $SV_t$ ermittelt und die Werte werden miteinander verglichen. Aus diesen Ergebnissen wird die optimalste Anlagestrategie, also die Anlagestrategie beispielsweise mit maximaler Rendite r unter Eingehen des minimalen Risikos bestimmt.

Die Bestimmung der optimalsten Anlagestrategie kann auch unter vorgebbaren Restriktionen erfolgen, beispielsweise unter Berücksichtigung eines maximalen Risikos, das der Investor bereit ist einzugehen. Weitere Ristriktionen, die darin liegen können, daß bestimmte Anlageformen von vornherein ausgeschlossen sind, sind in Weiterbildungen des erfindungsgemäßen Verfahrens vorgesehen.

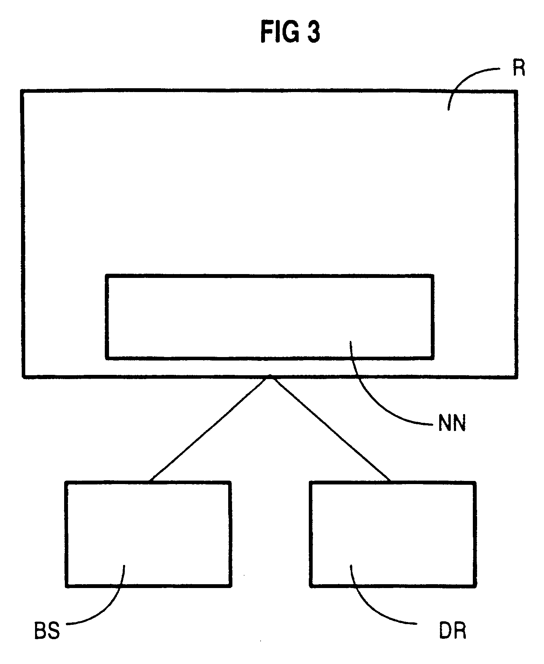

In Figur 3 ist eine Anordnung eines Rechners R dargestellt, mit dem das erfindungsgemäße Verfahren notwendigerweise durchgeführt wird. Weiterhin ist in Figur 3 der Bildschirm BS sowie der Drucker DR dargestellt, mit dem jeweils das Ergebnis des erfindungsgemäßen Verfahrens, das durch den Rechner ermittelt wurde, einem Benutzer dargestellt werden kann. Weiterhin ist in der Anordnung das Neuronale Netz NN symbolisch dargestellt, welches durch den Rechner R trainiert wird.

In diesem Dokument wurden folgende Veröffentlichungen zitiert:

[1] E. Elton et al, Modern Portfolio Theory and Investment Analysis, John Wiley & Sons, Inc., 4. Auflage, New York, ISBN 0-471-53248-7, S. 15 - 93, 1981

[2] A. Barto et al, Learning to Act Using Real-Time Dynamic Programming Department of Computer Science, Unvivesity of Massachusetts, Amherst MA 01003, S. 1 - 65, Januar 1993

**Patentansprüche**

1. Verfahren zum Trainieren eines Neuronalen Netzes (NN), bei dem folgende Schritte iterativ durchgeführt werden:

    a) ein Zustandsvektor ($SV_t$) wird bestimmt, der Elemente aufweist, die einen Finanzmarkt charakterisieren (101),
    b) für den Zustandsvektor ($SV_t$) wird eine Bewertung ($V_t$) bezüglich vorgegebener Bewertungsgrößen ermittelt (102), und
    c) mindestens anhand der Bewertung ($V_t$) dieses Zustandsvektors ($SV_t$) und einer ermittelten Bewertung ($V_{t+1}$) mindestens eines folgenden Zustandsvektors ($SV_{t+1}$) (103) werden mit Hilfe einer Verstärkungs-Lern-Methode (Reinforcement Learning) Gewichte des Neuronalen Netzes (NN) adaptiert (104),

    wobei mit wachsender Anzahl von Iterationsschritten der jeweilige folgende Zustandsvektor $SV_{t+1}$ mit seiner Bewertung $V_{t+1}$ im Vergleich mit vorangehenden Iterationsschritten in immer geringeren Maße in die Adaption der Gewichte einfließt.

2. Verfahren nach Anspruch 1,
   bei dem der Zustandsvektor ($SV_t$) jeweils mindestens eine der folgenden Größen aufweist:

    - mindestens einen Kurs mindestens eines Aktienindex,
    - mindestens eine Angabe mindestens eines Rentenmarktzinssatzes,
    - mindestens eine Wechselkursangabe für mindestens eine erste Währung in mindestens eine zweite Währung,
    - ein Goldpreis,

    - Größen, die ein Kurs-/Gewinn-Verhältnis mindestens eines Unternehmens beschreiben.

3. Verfahren nach Anspruch 1 oder 2,
   bei dem der Zustandsvektor ($SV_t$) jeweils mindestens eine Angabe über einen Kapitalstand eines Anlegers aufweist.

4. Verfahren nach einem der Ansprüche 1 bis 3,
   bei dem die vorgegebenen Bewertungsgrößen mindestens ein Anlagerisiko und/oder mindestens eine ermittelte Rendite mindestens einer Anlageform beschreiben.

5. Verfahren nach einem der Ansprüche 1 bis 4,
   bei dem die vorgegebenen Bewertungsgrößen mindestens Transaktionskosten mindestens einer Anlageform beschreiben.

6. Verfahren nach einem der Ansprüche 1 bis 5,

    - bei dem bei mehreren möglichen folgenden Zustandsvektoren ($SV_{t+1}$) für alle folgenden Zustandsvektoren ($SV_{t+1}$) eine Auftretenswahrscheinlichkeit bestimmt wird, und
    - bei dem die Bewertung ermittelt wird durch Summenbildung der Bewertungen ($V_{t+1}$) aller möglichen folgenden Zustandsvektoren ($SV_{t+1}$) multipliziert mit der jeweiligen Auftretenswahrscheinlichkeit des Zustandsvektors.

7. Verfahren nach einem der Ansprüche 1 bis 6,
   bei dem ein Reduzierungsfaktor ($\lambda$) vorgesehen wird, durch den mit steigender Anzahl erfolgter Iterationsschritten die Bewertungen ($V_{t+1}$) des mindestens einen folgenden Zustandsvektors ($SV_{t+1}$) reduziert wird.

8. Neuronales Netz (NN), welches durch ein Verfahren trainiert wurde, bei dem folgende Schritte iterativ durchgeführt werden:

    a) ein Zustandsvektor ($SV_t$) wird bestimmt, der Elemente aufweist, die einen Finanzmarkt charakterisieren (101),
    b) für den Zustandsvektor ($SV_t$) wird eine Bewertung ($V_t$) bezüglich vorgegebenen Bewertungsgrößen ermittelt (102), und
    c) mindestens anhand der Bewertung ($V_t$) dieses Zustandsvektors ($SV_t$) und einer ermittelten Bewertung ($V_{t+1}$) mindestens eines folgenden Zustandsvektors ($SV_{t+1}$) (103) werden mit Hilfe einer Verstärkungs-Lern-Methode (Reinforcement Learning) Gewichte des Neuronalen Netzes (NN) adaptiert (104),

    wobei mit wachsender Anzahl von Iterationsschritten der jeweilige folgende Zustandsvektor $SV_{t+1}$ mit

seiner Bewertung $V_{t+1}$ im Vergleich mit vorangehenden Iterationsschritten in immer geringeren Maße in die Adaption der Gewichte einfließt.

9. Verfahren zur Ermittlung einer Anlageentscheidung mit Hilfe eines Neuronalen Netzes (NN), das mit einem Verfahren nach einem der Ansprüche 1 bis 7 trainiert wurde,

- bei dem für mindestens zwei aller möglichen Anlageentscheidungen der folgende Zustandsvektor ($SV_{t+1}$), der sich bei der jeweiligen Anlageentscheidung ergibt, ermittelt wird, und
- bei dem die Anlageentscheidung einem Benutzer empfohlen wird, die zu einer höheren Bewertung ($V_{t+1}$) des folgenden Zustandsvektors ($SV_{t+1}$) bezüglich der Bewertungsgrößen geführt hat.

10. Verfahren zur Ermittlung einer Anlageentscheidung mit Hilfe eines Neuronalen Netzes (NN), das mit einem Verfahren nach einem der Ansprüche 1 bis 7 trainiert wurde,

- bei dem für mindestens zwei aller möglichen Anlageentscheidungen der folgende Zustandsvektor ($SV_{t+1}$), der sich bei der jeweiligen Anlageentscheidung ergibt, ermittelt wird, und
- bei dem die Anlageentscheidung getroffen wird, die zu einer höheren Bewertung ($V_{t+1}$) des folgenden Zustandsvektors ($SV_{t+1}$) bezüglich der Bewertungsgrößen geführt hat.

11. Verfahren zur Ermittlung einer Anlagestrategie mit Hilfe eines Neuronalen Netzes (NN), das mit einem Verfahren nach einem der Ansprüche 1 bis 7 trainiert wurde,

- bei dem mehrere Folgen von Anlageentscheidungen mit unterschiedlichen Werten der Bewertungsgrößen bestimmt werden, und
- bei dem aus den Folgen von Anlageentscheidungen eine bezüglich eines vorgebbaren Zieles optimale Folge von Anlageentscheidungen ermittelt wird, und
- bei dem die Anlagestrategie sich ergibt aus den Bewertungsgrößen, die bei der optimalen Folge von Anlageentscheidungen verwendet wurden.

## Claims

1. Method for training a neural network (NN), in which the following steps are carried out iteratively:

a) a state vector ($SV_t$) is determined which has elements which characterize (101) a financial market,
b) a weighting ($V_t$) is determined (102) for the state vector ($SV_t$) with reference to prescribed weighting variables, and
c) a reinforcement learning method is used to adapt (104) weights of the neural network (NN) at least with the aid of the weighting ($V_t$) of this state vector ($SV_t$) and a determined weighting ($V_{t+1}$) of at least one following state vector ($SV_{t+1}$) (103), in which case with a rising number of iteration steps the respective following state vector $SV_{t+1}$ with its weighting $V_{t+1}$ influences the adaptation of the weights to an ever lesser extent by comparison with preceding iteration steps.

2. Method according to Claim 1, in which the state vector ($SV_t$) has in each case at least one of the following variables:

- at least one price of at least one share price index,
- at least one quotation of at least one bond market interest rate,
- at least one quotation of the rate of exchange for at least one first currency into at least one second currency,
- a gold price, and
- variables which describe a price-earnings ratio of at least one company.

3. Method according to Claim 1 or 2, in which the state vector ($SV_t$) in each case has at least one specification of a capital status of an investor.

4. Method according to one of Claims 1 to 3, in which the prescribed weighting variables describe at least one investment risk and/or at least one determined rate of return of at least one type of investment.

5. Method according to one of Claims 1 to 4, in which the prescribed weighting variables describe at least transaction costs of at least one type of investment.

6. Method according to one of Claims 1 to 5,

- in which, given a plurality of possible following state vectors ($SV_{t+1}$), a probability of occurrence is determined for all following state vectors ($SV_{t+1}$), and
- in which the weighting is determined by summing the weightings ($V_{t+1}$) of all possible following state vectors ($SV_{t+1}$) multiplied by the respective probability of occurrence of the state vector.

7. Method according to one of Claims 1 to 6, in which a reduction factor ($\lambda$) is provided by means of which, given the rising number of iteration steps performed, the weightings ($V_{t+1}$) of the at least one following state vector ($SV_{t+1}$) are reduced.

8. Neural network (NN) which has been trained by a method in the case of which the following steps are carried out iteratively:

a) a state vector ($SV_t$) is determined which has elements which characterize (101) a financial market,
b) a weighting ($V_t$) is determined (102) for the state vector ($SV_t$) with reference to prescribed weighting variables, and
c) a reinforcement learning method is used to adapt (104) weights of the neural network (NN) at least with the aid of the weighting ($V_t$) of this state vector ($SV_t$) and a determined weighting ($V_{t+1}$) of at least one following state vector ($SV_{t+1}$) (103), in which case with a rising number of iteration steps the respective following state vector $SV_{t+1}$ with its weighting $V_{t+1}$ influences the adaptation of the weights to an ever lesser extent by comparison with preceding iteration steps.

9. Method for determining an investment decision with the aid of a neural network (NN) which has been trained with the aid of a method according to one of Claims 1 to 7,

- in which for at least two of all the possible investment decisions the following state vector ($SV_{t+1}$) resulting from the respective investment decision is determined, and
- in which a user is recommended the investment decision which has led to a higher weighting ($V_{t+1}$) of the following state vector ($SV_{t+1}$) with reference to the weighting variables.

10. Method for determining an investment decision with the aid of a neural network (NN) which has been trained with the aid of a method according to one of Claims 1 to 7,

- in which for at least two of all the possible investment decisions the following state vector ($SV_{t+1}$) resulting from the respective investment decision is determined, and
- in which the investment decision is taken which has led to a higher weighting ($V_{t+1}$) of the following state vector ($SV_{t+1}$) with reference to the weighting variables.

11. Method for determining an investment strategy with the aid of a neural network (NN) which has been trained with the aid of a method according to one of Claims 1 to 7,

- in which a plurality of sequences of investment decisions with different values of the weighting variables are determined, and
- in which a sequence of investment decisions which are optimal with reference to a prescribed aim is determined from the sequences of investment decisions, and
- in which the investment strategy is obtained from the weighting variables which were used in the optimal sequence of investment decisions.

## Revendications

1. Méthode d'apprentissage d'un réseau neuronal (NN), dans laquelle les étapes suivantes sont exécutées en mode itératif : a) un vecteur d'état ($SV_t$), qui comporte des éléments caractéristiques d'un marché financier (101), est déterminé, b) une évaluation ($SV_t$) relative aux paramètres d'évaluation prédéterminés (102) est déterminée pour le vecteur d'état ($SV_t$) et c) au moins à l'aide de l'évaluation ($V_t$) de ce vecteur d'état ($SV_t$) et d'une évaluation déterminée ($V_{t+1}$) d'au moins un vecteur d'état suivant ($SV_{t+1}$) (103), les poids du réseau neuronal (NN) sont adaptés à l'aide d'une méthode d'apprentissage renforcé (reinforcement learning) (104), le vecteur d'état suivant ($SV_{t+1}$) respectif avec son évaluation ($V_{t+1}$) entrant à un degré de plus en plus faible dans l'adaptation des poids par comparaison avec les étapes d'itération précédentes au fur et à mesure que le nombre d'étapes d'itération augmente.

2. Méthode selon la revendication 1, dans laquelle le vecteur ($SV_t$) présente au moins l'un des paramètres suivants:

- au moins un cours d'au moins un indice boursier,
- au moins une indication d'au moins un taux d'intérêt d'un marché obligataire,
- au moins une indication de taux de change pour au moins une première monnaie dans au moins une seconde monnaie,
- un prix de l'or,
- des paramètres qui décrivent un rapport cours/ bénéfice d'au moins une entreprise.

3. Méthode selon la revendication 1 ou 2, dans laquelle le vecteur d'état ($SV_t$) comporte respectivement au moins une indication sur l'état des capitaux d'un investisseur.

4. Méthode selon l'une des revendications 1 à 3, dans laquelle les paramètres d'évaluation décrivent au moins un risque de l'investisseur et/ou au moins un rendement déterminé d'au moins une forme de placement.

5. Méthode selon l'une des revendications 1 à 4 dans laquelle les paramètres d'évaluation prédéfinis décrivent au moins les frais de transaction d'au moins une forme de placement.

6. Méthode selon l'une des revendications 1 à 5,

- dans laquelle avec plusieurs vecteurs d'état suivants ($SV_{t+1}$) une probabilité d'apparition est déterminée pour tous les vecteurs d'état suivants ($SV_{t+1}$), et
- dans laquelle l'évaluation est déterminée par totalisation des évaluations ($V_{t+1}$) de tous les vecteurs d'état suivants possibles ($SV_{t+1}$) multipliés par la probabilité d'apparition respective du vecteur d'état.

7. Procédé selon l'une des revendications 1 à 6, dans laquelle un facteur de réduction ($\lambda$) est prévu, par l'intermédiaire duquel les évaluations ($V_{t+1}$) d'au moins un vecteur d'état suivant ($SV_{t+1}$) sont réduits au fur et à mesure que le nombre d'étapes d'itération effectuées augmente.

8. Réseau neuronal (NN), ayant été soumis à un apprentissage par une méthode dans laquelle les étapes suivantes sont exécutées en mode itératif :

a) un vecteur d'état ($SV_t$), qui comporte des éléments caractéristiques d'un marché financier (101) est déterminé, b) une évaluation ($SV_t$) relative aux paramètres d'évaluation prédéterminés (102) est déterminée et c) au moins à l'aide de l'évaluation ($V_t$) de ce vecteur d'état ($SV_t$) et d'une évaluation déterminée ($V_{t+1}$) d'au moins un vecteur d'état suivant ($SV_{t+1}$) (103) les poids du réseau neuronal (NN) sont adaptés à l'aide d'une méthode d'apprentissage renforcé (reinforcement learning) (104), le vecteur d'état suivant respectif ($SV_{t+1}$) avec son évaluation ($V_{t+1}$) entrant à un degré de plus en plus faible dans l'adaptation des poids par comparaison avec les étapes d'itération précédentes au fur et à mesure que le nombre d'étapes d'itération augmente,

9. Méthode de détermination d'une décision de placement à l'aide d'un réseau neuronal (NN), soumis à un apprentissage par une méthode selon l'une des revendications 1 à 7,

- dans laquelle pour au moins deux de l'ensemble des décisions de placement possibles le vecteur d'état suivant ($SV_{t+1}$), qui découle de la décision de placement respective, est déterminé, et
- dans laquelle la décision de placement qui a conduit à une évaluation supérieure ($V_{t+1}$) du vecteur d'état ($SV_{t+1}$) relatif aux paramètres d'évaluation, est recommandé à un utilisateur.

10. Méthode de détermination d'une décision de placement à l'aide d'un réseau neuronal (NN), ayant été soumis à un apprentissage selon une méthode correspondant à l'une des revendications 1 à 7,

- dans laquelle pour au moins deux de l'ensemble des décisions de placement possibles le vecteur d'état suivant ($SV_{t+1}$), qui découle de la décision de placement respective, est déterminé, et
- dans laquelle est prise la décision de placement, qui a conduit à une évaluation supérieure ($V_{t+1}$) du vecteur d'état suivant ($SV_{t+1}$) relatif aux paramètres d'évaluation.

11. Méthode de détermination d'une stratégie de placement à l'aide d'un réseau neuronal (NN), ayant été soumis à un apprentissage par la méthode selon l'une des revendications 1 à 7,

- dans laquelle plusieurs séquences de décisions de placement sont déterminées avec différentes valeurs des paramètres d'évaluation, et
- dans laquelle une séquence optimale de décision de placement relative à un objectif prédéfinissable, est déterminée à partir des séquences de décision de placement, et
- dans laquelle la stratégie de placement découle des paramètres d'évaluation utilisés avec la séquence optimale de décision de placement.

# FIG 1

# FIG 2

201

202

203

204

# FIG 3